# EUROPEAN PATENT APPLICATION

(11) **EP 2 706 744 A2**
(43) Date of publication of application: **12.03.2014**
(21) Application number: 12807876.3
(22) Date of filing: 05.07.2012
(51) Int. Cl.: H04N 1/46, G09G 5/00

(54) **TRANSMITTING APPARATUS, RECEIVING APPARATUS, METHOD FOR TRANSMITTING AN IMAGE SIGNAL, AND METHOD FOR RECEIVING AN IMAGE SIGNAL**

(30) Priority: 05.07.2011 US 201161504378 P
(71) Applicant: Samsung Electronics Co., Ltd., Suwon-si, Gyeonggi-do 443-742 (KR)
(72) Inventor: LEE, Jae-min, Suwon-si Gyeonggi-do 442-703 (KR); KIM, Soo-young, Suwon-si Gyeonggi-do 443-706 (KR); KIM, Seung-hwan, Seoul 122-042 (KR); KIM, Jong-hwa, Suwon-si Gyeonggi-do 441-721 (KR); NA, Il-ju, Seongnam-si Gyeonggi-do 463-850 (KR); SINGH, Harkirat, San José, CA 95135 (US)
(74) Representative: Davies, Robert Ean
(86) International application number: PCT/KR2012/005349
(87) International publication number: WO 2013/006001

(57) **Abstract**

Disclosed is a transmitting apparatus. The transmitting apparatus according to various embodiments of the present invention comprises: a packet generator which generates packet containing color space information on a plurality of color channels constituting image signals; and a transmitter which transmits the packet to a receiving apparatus according to HDMI standard, wherein the color space information includes a number of extended bits so as to additionally express deep color information.

## Description

### CROSS-REFERENCE TO RELATED APPLICATIONS

This patent application is a U.S. national phase under 35 U.S.C 371 of PCT/KR2012/005349 filed on July 5, 2012, which claims the benefit of priority from U.S. Provisional Application No. 61/504,378, filed on July 5, 2011, in the Korean Intellectual Property Office, the disclosure of which is incorporated herein by reference in its entirety.

### BACKGROUND

### 1. Field of the Invention

Devices and methods consistent with what is disclosed herein relate to a transmitting and receiving method of image signals, and more specifically, to a transmitting apparatus, a receiving apparatus, a transmitting method of image signals, and a receiving method of image signals, which conform to the transmitting and receiving method of image signals according to IEC61883-8.

### 2. Description of the Related Art

While an amount of multimedia contents increases, numerous high quality multimedia contents emerge as various adventures for designers and administrators regarding computing platform and network. Thus, various standards are developed to transmit high quality multimedia contents. For example, VESA (Video Electronics Standards Association) is developing DisplayPort (DP) standard which is recently highlighted. DiiVA (Digital Interactive Interface for Video & Audio) and HDBaseT are distinguished standards which are developed to support transmitting high quality multimedia data. Among the above mentioned standards, video path has normally one-directionality. For example, video data are allowed to be transmitted toward one direction between two physical ports. However, necessity to support transmitting video toward both directions through switch network is being felt. In other words, it is requested to revise IEC61883-8 for high quality video such as 4K, deep color, and 3D (3-dimensional).

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to an embodiment, a technical objective is to define color space information to express deep color in IEC61883-8, define 4k, deep color, and 3D video modes, a transmitting apparatus, a receiving apparatus, an image signal transmitting method and an image signal receiving method which can transmit and receive image signals according to the defined standard.

The transmitting apparatus according to an embodiment may include a packet generator configured to generate packet containing color space information regarding a plurality of color channels constituting image signals, and a transmitter configured to transmit the packet to a receiving apparatus according to HDMI standard. The color space information may include a number of extended bits to additionally express deep color information.

Further, the color space information may be defined with one format among a plurality of formats, and the packet may include stream information fields containing format information to designate format of the color bandwidth information.

Further, the format may be any one of first format which includes 20 extended bits per one pixel in YUV 4:2:2 packet, second format which includes 30 extended bits per one pixel in YUV 4:4:4 packet, third format which includes 24 extended bits per one pixel in YUV 4:2:2 packet, fourth format which includes 36 extended bits per one pixel in YUV 4:4:4 packet, fifth format which includes 30 extended bits per one pixel in RGB packet, and sixth format which includes 36 extended bits per one pixel in RGB packet.

Further, the packet header may include fields which video mode information is recorded, and the video mode information may be index information regarding characteristics of the image signals which are divided and defined with a plurality of items.

Further, the plurality of items may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

The receiving apparatus according to an embodiment includes a receiver configured to receive packet according to HDMI standard, a packet processor configured to perform parsing of the packet and extract color space information regarding a plurality of color channels constituting image signals; and a display configured to display the image signals according to the extracted color space information. The color space information may include a number of extended bits to additionally express deep color information.

Further, the color space information may be defined with one format among a plurality of formats, and the packet may include stream information fields containing format information to designate format of the color space information.

Further, the format may be any one of first format which includes 20 extended bits per one pixel in YUV 4:2:2 packet, second format which includes 30 extended bits per one pixel in YUV 4:4:4 packet, third format which includes 24 extended bits per one pixel in YUV 4:2:2 packet, fourth format which includes 36 extended bits per one pixel in YUV 4:4:4 packet, fifth format which includes 30 extended bits per one pixel in RGB packet, and sixth format which includes 36 extended bits per one pixel in RGB packet.

The image signal transmitting method according to an embodiment includes generating packet containing color space information regarding a plurality of channels constituting image signals, and transmitting the packet to a receiving apparatus according to HDMI standard. The color bandwidth information may include a number of extended bits to additionally express deep color information.

Further, the color space information may be defined with one format among a plurality of formats, and the packet may include stream information fields containing format information to designate format of the color bandwidth information.

Further, the format may be any one of first format which includes 20 extended bits per one pixel in YUV 4:2:2 packet, second format which includes 30 extended bits per one pixel in YUV 4:4:4 packet, third format which includes 24 extended bits per one pixel in YUV 4:2:2 packet, fourth format which includes 36 extended bits per one pixel in YUV 4:4:4 packet, fifth format which includes 30 extended bits per one pixel in RGB packet, and sixth format which includes 36 extended bits per one pixel in RGB packet.

Further, the packet header may include fields which video mode information is recorded, and the video mode information may be index information regarding characteristics of the image signals which are divided and defined with a plurality of items.

Further, the items may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

The image signal receiving method according to an embodiment includes receiving packet according to HDMI standard, performing parsing of the packet and extracting color space information regarding a plurality of color channels constituting image signals, and displaying the image signals according to the extracted color space information. The color space information may include a number of extended bits to additionally express deep color information.

Further, the color space information may be defined with one format among a plurality of formats, and the packet may include stream information fields containing format information to designate format of the color space information.

Further, the format may be any one of first format which includes 20 extended bits per one pixel in YUV 4:2:2 packet, second format which includes 30 extended bits per one pixel in YUV 4:4:4 packet, third format which includes 24 extended bits per one pixel in YUV 4:2:2 packet, fourth format which includes 36 extended bits per one pixel in YUV 4:4:4 packet, fifth format which includes 30 extended bits per one pixel in RGB packet, and sixth format which includes 36 extended bits per one pixel in RGB packet.

The transmitting apparatus according to another embodiment includes a packet generator configured to generate packet constituted with packet header including fields which video mode information is recorded and payload which image data is recorded, and a transmitter configured to transmit the packet to a receiving apparatus according to HDMI standard. The video mode information may be index information regarding characteristics of the image signals which are divided and defined with a plurality of items.

Further, the items may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

Further, the video mode information may be index information regarding 3D (3-dimensional) image signals or UD (ultra definition) image signals which are divided and defined with a plurality of items.

The receiving apparatus according to another embodiment includes a receiver configured to receive image signal packet containing video mode information, a packet processor configured to perform parsing of the image signal packet by referring to the video mode information, and a display configured to display the extracted image signals according to the parsing results. The video mode information may be index information regarding characteristics of 3D image signals or UD image signals which are divided and defined with a plurality of items.

Further, the items may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

The image signal transmitting method according to another embodiment includes generating packet constituted with packet header including fields which video mode information is recorded and payload which image data is recorded, and transmitting the packet to a receiving apparatus according to HDMI standard. The video mode information may be index information regarding characteristics of the image signals which are divided and defined with a plurality of items.

Further, the items may be at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

Further, the video mode information may be index information regarding characteristics of 3D image signals or UD image signals which are divided and defined with a plurality of items.

The image signal receiving method according to another embodiment includes receiving image signal packet including video mode information, parsing the image signal packet by referring to the video mode information, and displaying the extracted image signals according to the parsing results. The video mode information may be index information regarding characteristics of 3D image signals or UD image signals which are divided and defined with a plurality of items.

Further, the items may be at least one of active vertical lines, active horizontal pixels, interlace/progressive, vertical frequency (Hz), source packet size for color space 0 (bytes, 422), source packet size for color space 1 and 2 (bytes, 444), SYT interval for color space 0

(422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

According to the above various embodiments, color space information to express deep color in IEC61883-8 can be defined, 4k, deep color, and 3D video modes can be defined, and the transmitting apparatus, the receiving apparatus, the image signal transmitting method and the image signal receiving method, which transmit and receive image signals according to the defined standard, can be provided.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a diagram illustrating an example of HDMI 2.0 network;
FIG. 2 is a diagram illustrating HDMI 2.0 protocol stack based on IEEE 802.1AVB, 1722 and IEC61883;
FIG. 3 is a diagram illustrating a table indicating types of 3D video formats in HDM11.4[2];
FIG. 4 is a diagram illustrating frame packing format;
FIG. 5 is a diagram illustrating field alternative format;
FIG. 6 is a diagram illustrating line alternative format;
FIG. 7 is a diagram illustrating side-by-side (full) format;
FIG. 8 is a diagram illustrating L+depth format;
FIG. 9 is a diagram illustrating L+depth+graphics+graphics depth format;
FIG. 10 is a diagram illustrating side-by-side (half) format;
FIG. 11 is a reference illustrating a table indicating color space format newly defined;
FIG. 12 is a diagram illustrating image signal stream of new color space 4₁₆;
FIG. 13 is a diagram illustrating image signal stream of new color space 5₁₆;
FIG. 14 is a diagram illustrating image signal stream of new color space 6₁₆;
FIG. 15 is a diagram illustrating image signal stream of new color space 7₁₆;
FIG. 16 is a diagram illustrating image signal stream of new color space 8₁₆;
FIG. 17 is a diagram illustrating image signal stream of new color space 9₁₆;
FIG. 18 is a block diagram of a transmitting apparatus according to an embodiment;
FIG. 19 is a diagram illustrating packet header defining stream information field;
FIG. 20 is a block diagram of a receiving apparatus according to an embodiment;
FIG. 21 is a flowchart of an image signal transmitting method according to various embodiments;
FIG. 22 is a flowchart of an image signal receiving method according to various embodiments;
FIG. 23 is a diagram illustrating a table newly defining 3D, UD, and deep color video formats;
FIG. 24 is a diagram illustrating field values of Table 1 according to IEC61883-8[1] which 4K, deep color, and 3D video modes are added;
FIG. 25 is a block diagram of the transmitting apparatus according to various embodiments;
FIG. 26 is a block diagram of the receiving apparatus according to various embodiments;
FIG. 27 is a flowchart of the image signal transmitting method according to various embodiments; and
FIG. 28 is a flowchart of the image signal receiving method according to various embodiments.

### DETAILED DESCRIPTION OF EXEMPLARY EMBODIMENTS

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

Referring to the attached drawings, the invention will be described in detail below.

The multimedia consumer electronic apparatus market is fast moving toward more precise audio/video products. Consumers are customized to high definition video (HDV) in home entertainment center as well as high end graphics in a personal computer. CE manufacturers begin to provide HDV Blu-ray disc players and recorders which include substantially greater storage amount and performance in order to effectively handle higher bit rates related with HDTV contents. Various audio/video interface standards are developed to connect personal computers including audio/video renderer such as set-top box, DVD player, audio/video receiver, digital camera, game console, digital TV, HD video display panel or computer monitor. The digital video interface technologies that can be used in consumer electronic apparatuses can be mentioned with examples of high definition multimedia interface (HDMI), display port (DP), digital video interface (DVI) and unified display interface (UDI). Such audio/video interfaces include unique physical interfaces and communication protocols for their own.

Current HDMI version does not support both-directional audio/video streaming. Meanwhile, ethernet network is widely distributed while covering business and home markets so at to be served and used anywhere for the ubiquitous. When in supporting high bandwidth traffics, such ethernet network has an advantage in saving much cost. Conventional home network connection may support 1000 BASE-T and 10 GBASE-T with more usage. Further, conventional network connection also includes wireless network link. Currently, developing HDMI 2.0 that can support both-directional audio/video streaming (AV streaming) is made by efforts. One possible option is to use AV Bridging (AVB) including spec set to allow high-quality and time-sensitive audio/video transmitting applications through IEEE 802 bridged LANs (local area networks).

This specification will discuss a packetization method of 3-dimesional (3D), ultra high definition (UD), and deep color video. Explanations will go as follows; first HDMI 2.0 architecture will be briefly mentioned, and 3D video format will be explained. Next, video formatting for deep color will be suggested and IEC61883-8[1] based on 3D, UD, and deep color formats will be suggested.

### HDMI 2.0 Architecture

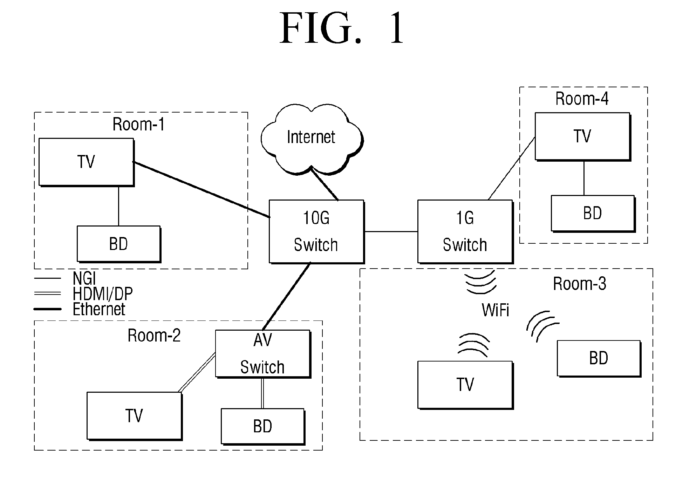

FIG. 1 is a diagram illustrating an example of HDMI 2.0 network.

Conventional IEEE 802.1 AVB network includes a set of AVB apparatuses, and herein, the set of AVB apparatuses indicates AVB block/domain. AVB network may include wireless or optical local area networks and/or wireless LANs such as 802.11ad/ac/a/g/n/ad/ac. AVB apparatuses within AVB network may include AVB enabled endpoint apparatuses (e.g., TV, AV receiver, desktop/laptop, and Blu-ray player), AVB enabled switching apparatus within LAN (AB switch), and AVB enabled access point within wireless LANs. In the inner of AVB blocks, AV destination apparatus may request AV stream from AV source devices, and the requested AV stream may be determined by QoS descriptors related with delivering the above AV stream and transmitted through AVB network within a range of specified latency target values.

HDMI 2.0 that will be used in a near future may include the above mentioned AVB network, and AVB network includes AVB endpoint that selectively supports next generation interface (NGI) of ultra high speed that can provide at least 20 Gps. Conventional room and room-to-room network connection are expected to support at least 1000BASE-T. However, 10GBASE-T and more will be generally used in a future.

Payload may include A/V contents that can be formatted by display interface processes such as natural video, HDMI, DP or DVI. Various video formats may support various scopes from 3D, 4KUD to HD. The example of HDMI2.0 network is described in FIG. 1.

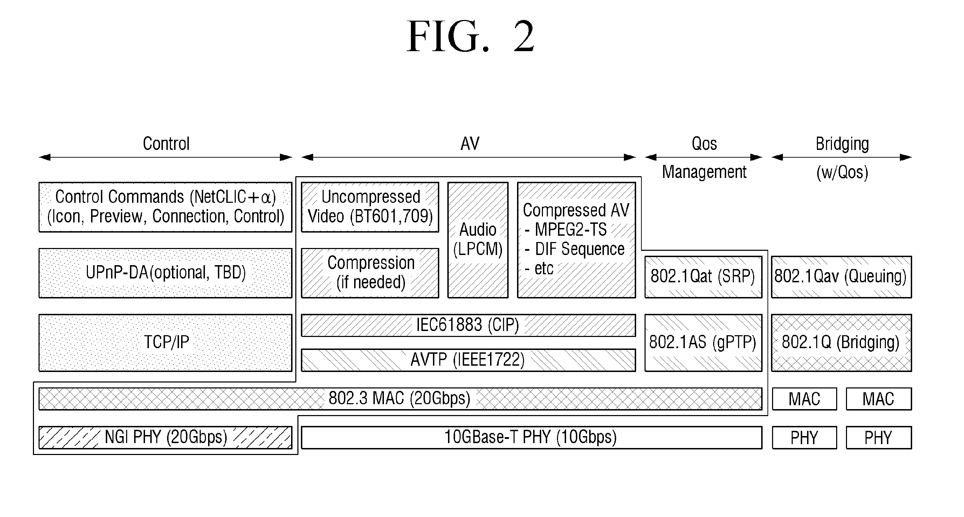

FIG. 2 is a diagram illustrating HDMI2.0 protocol stack based on IEEE 802.1AVB, 1722 and IEC61883.

IEC61883 block performs a role of packetize the received video from application classes and transmitting to AVTP for delivery.

The following will explain 3D video format in HDMI1.4.

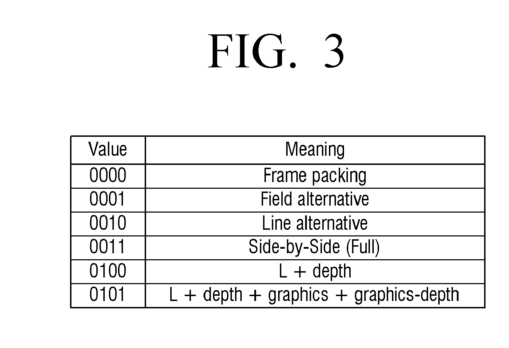

FIG. 3 is a diagram illustrating a table indicating types of 3D video formats in HDMI1.4[2].

Referring to FIG. 3, HDMI1.4[2] provides various 3D video formats named as frame packing, field alternative, line alternative, side-by-side (full), L+depth, and L+depth+graphics+graphics depth. The following will briefly explain each of 3D video formats. This description is protected by IEC61883-8.

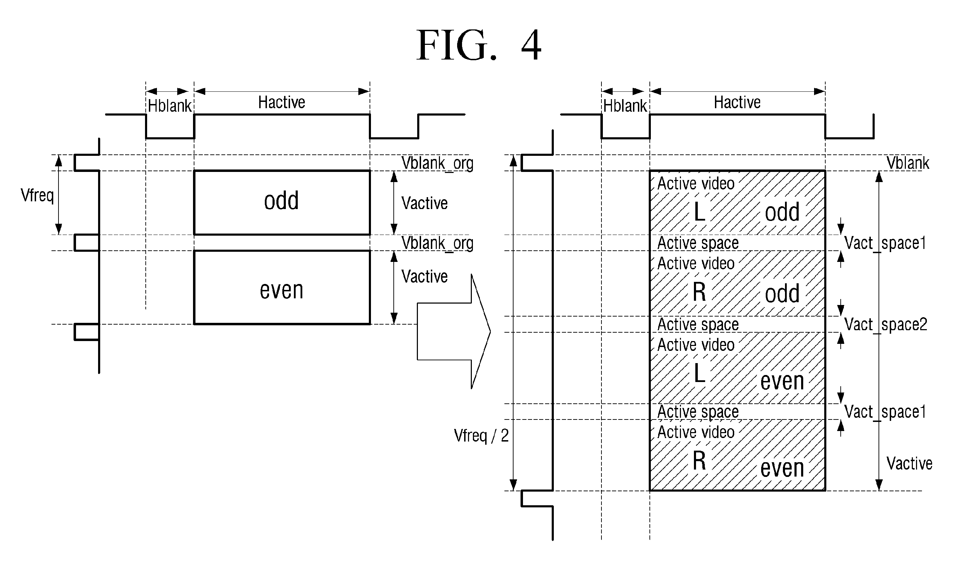

FIG. 4 is a diagram illustrating frame packing format.

Frame packing format is format which transmits 3D video according to interlace mode. It transmits odd lines and even lines of image signals on Hactive and Vactive sections. Regarding 3D video formats, frame rates are reduced by half (Vfreq/2), and left-eye image signals and right-eye image signals (or right-eye image signals and left-eye image signals) are consecutively transmitted. As a result, a left-eye odd line, a right-eye odd line, a left-eye even line, and a right-eye even line are consecutively transmitted.

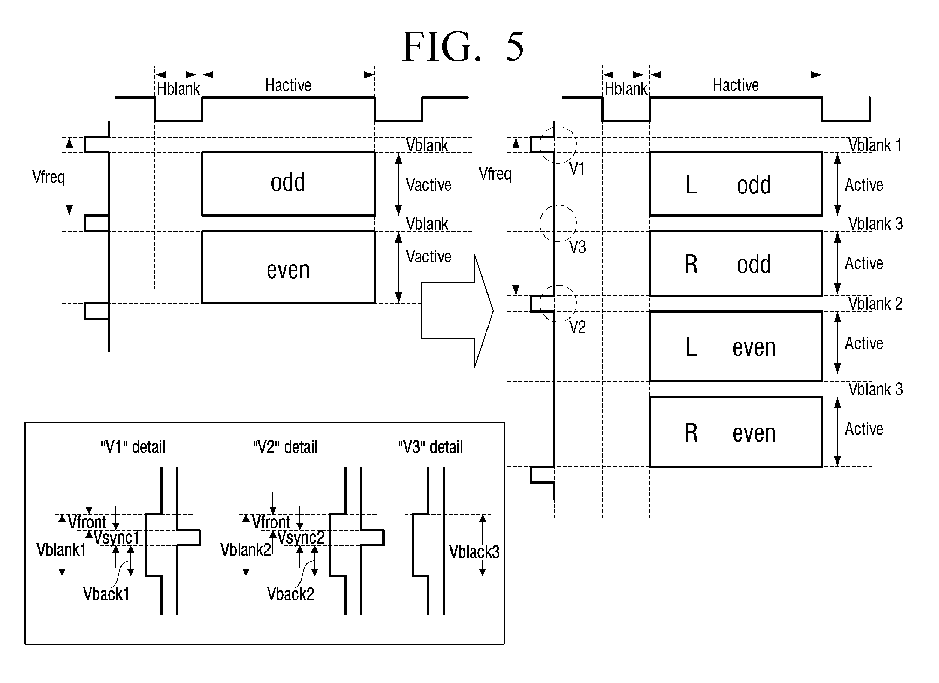

FIG. 5 is a diagram illustrating field alternative format.

Field alternative 3D video format is method which first transmits a left-eye odd line and a right-eye odd line images during frame rate (Vfreq), and next transmits a left-eye even line and a right-eye even line images during consecutive frame rate (Vfreq). The field alternative 3D video format also follows to the interlace mode.

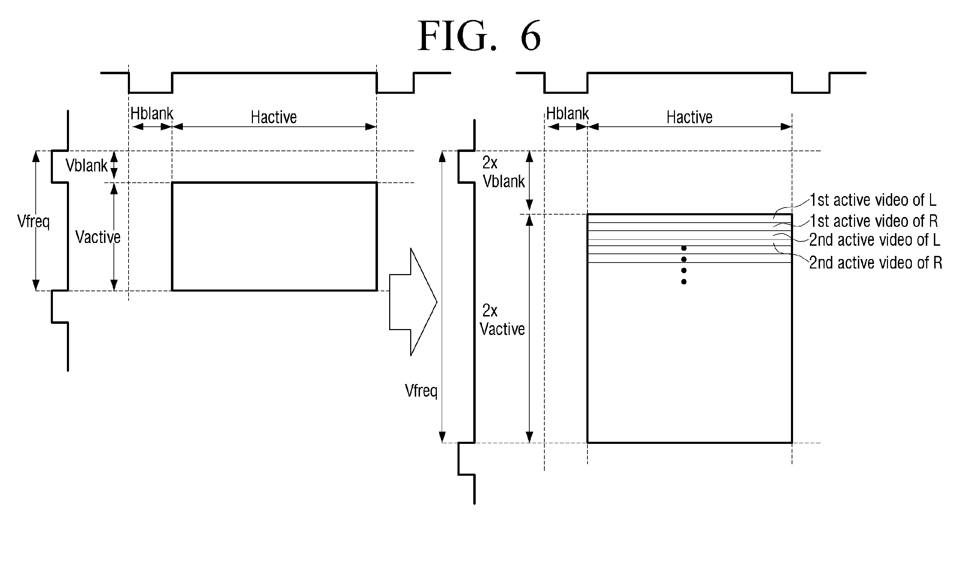

FIG. 6 is a diagram illustrating line alternative format.

Line alternative format is method which alternately transmits line image signals of a left-eye image frame and a right-eye image frame constituting one 3D frame. For example, it transmits image signals according to a following order: a first line of the left-eye image frame, a first line of the right-eye image frame, a second line of the left-eye image frame, and a second line of the right-eye image frame. One frame (left-eye image frame, right-eye image frame) is transmitted during one Vactive section.

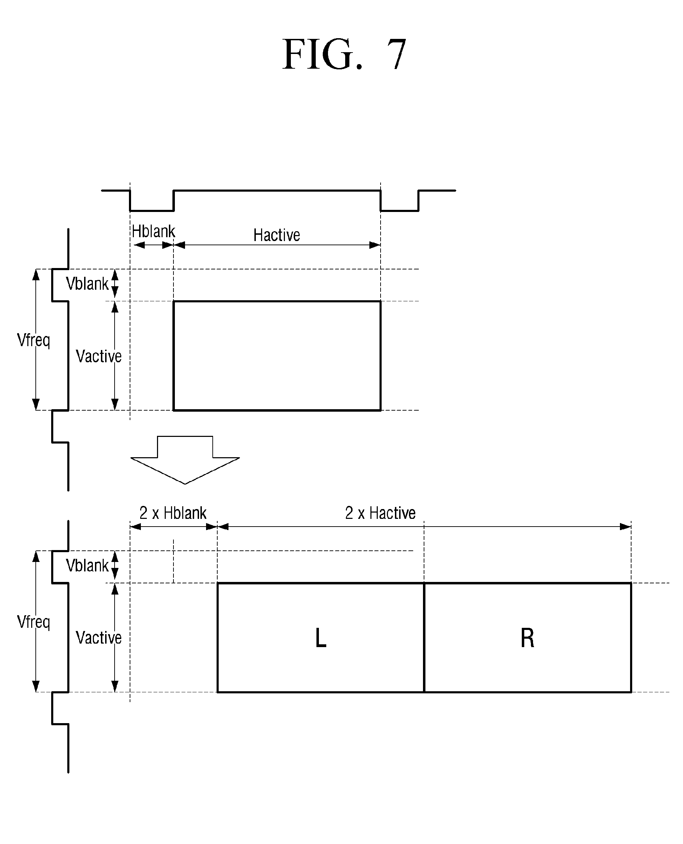

FIG. 7 is a diagram illustrating side-by-side (full) format.

Side-by-side (full) format is method which transmits line image signals of a left-eye image frame and a right-eye image frame constituting one 3D frame together during one Hactive section. In this case, because twice amount of information should be transmitted, Hactive section increases twice longer than being performed in the other cases. This method has similarity with the line alternative format in that transmitting is performed according to a following order: a first line of the left-eye image frame, a first line of the right-eye image frame, a second line of the left-eye image frame, and a second line of the right-eye image frame. However, it may have difference in that transmitting one line of the left-eye image frame and one line of the right-eye image frame is performed during the same Hactive section.

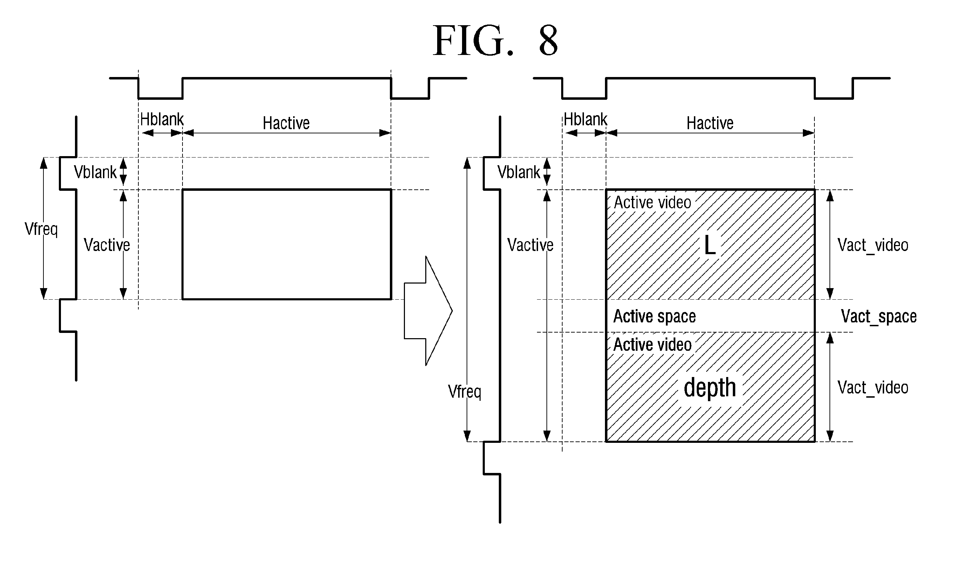

FIG. 8 is a diagram illustrating L+depth format.

L+depth format is method which first transmits a left-eye image frame constituting one 3D frame, and next transmits information regarding the depth.

Information regarding the depth is information indicating the depth of 3D image and corresponding to binocular disparity between a left-eye image frame and a right-eye image frame regarding 3D image frame. Dimensional feeling that humans can feel varies according to the depth information. In other words, when the depth is bigger, dimensional feeling becomes greater because the disparity between the left and right eyes is big. When the depth is smaller, dimensional feeling becomes relatively weaker because the disparity between the left and right eyes is small.

According to this method, a left-eye image signal constituting one 3D image frame is first transmitted during one Vactive section, and the depth information is transmitted within the same section. Herein, the depth information may include corresponding depths to pixels of the left-eye image frame, and the receiving end generates a right-eye image signal of each pixel through the image signals of the pixels constituting the left-eye image frame and corresponding depths.

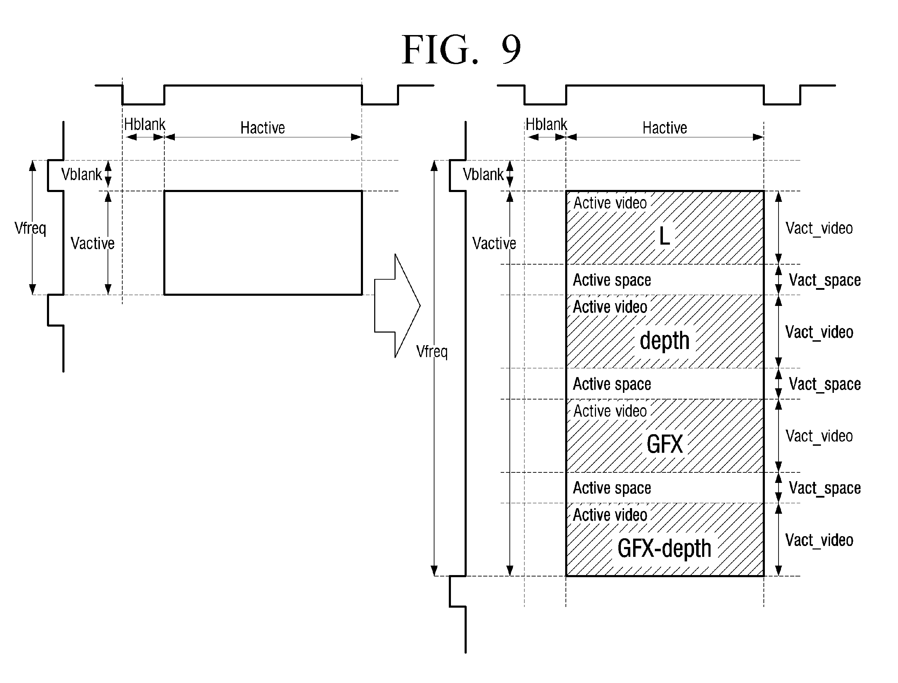

FIG. 9 is a diagram illustrating L+depth+graphics+graphics depth format.

L+depth+graphics+graphics depth method is method which further transmits graphics depth information as well as the left-eye image signals and the depth information. Transmitting is performed consecutively during one Vactive secion.

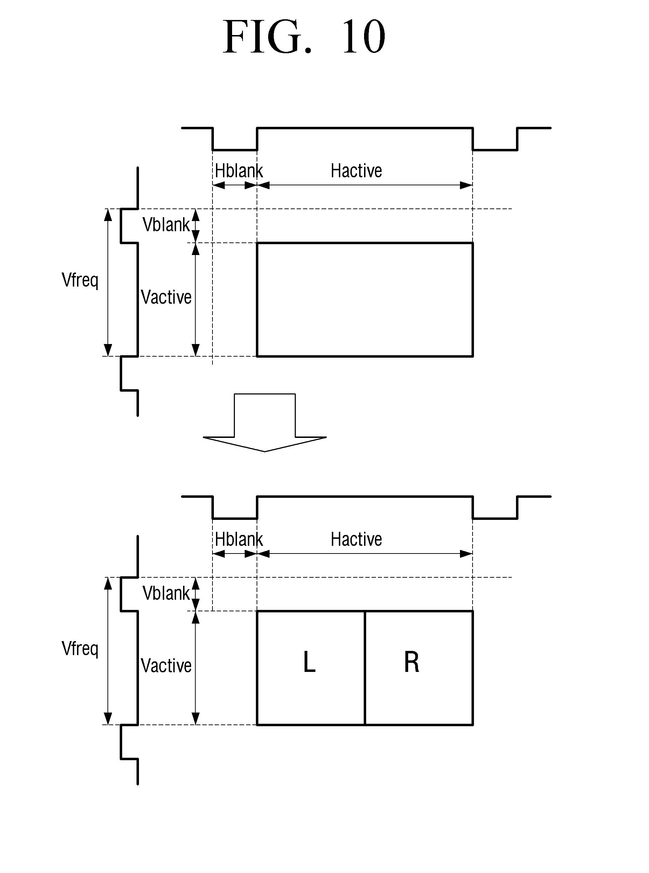

FIG. 10 is a diagram illustrating side-by-side (half) format.

Side-by-side (half) format is method which compresses the transmitted image signals and reduces their sizes, or transmits a half of the signals while transmitting the image signals according to the same method as the side-by-side (full) format described above. Hactive section is uniformly performed compared to being usually performed.

### Color Space Format for Deep Color

The following will suggest new color space format to express deep color.

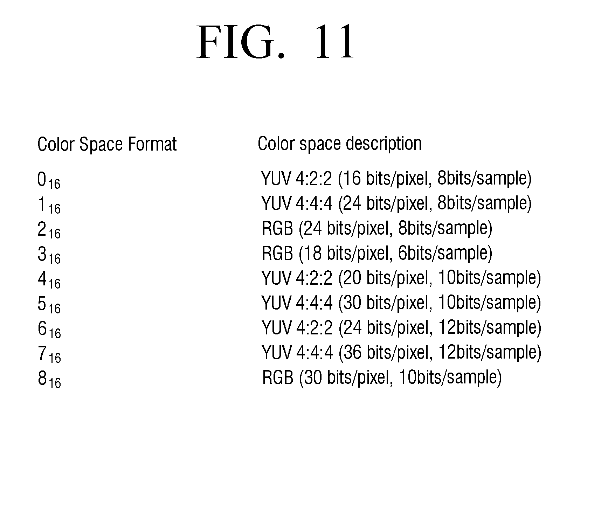

FIG. 11 is a reference illustrating a table indicating newly defined color space format.

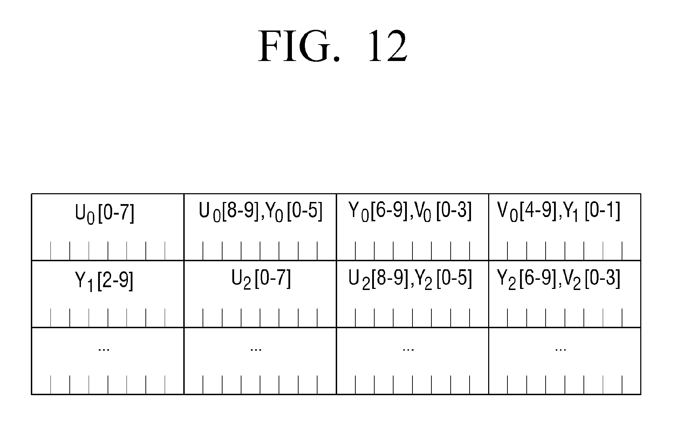

According to the definition in FIG. 11, color space fields are encoded. However, Table 3[1] of IEC61883-8 does not currently define deep color. New color space to define deep color may be added to 4₁₆, 5₁₆, 6₁₆, 7₁₆, 8₁₆, and 9₁₆ fields as illustrated in FIG. 11. FIGS. 12 to 17 describe video packetization methods respectively corresponding to the fields.

### Video Data Packetization

The following will explain video data packetization corresponding to the above color space fields 4₁₆, 5₁₆, 6₁₆, 7₁₆, 8₁₆, and 9₁₆. YUV format and RGB format will be respectively described. Regarding YUV format, a first bit becomes U always, which is bit 0 to express pixel 0. Bits respectively corresponding to U, Y, and V are consecutively transmitted.

FIG. 12 is a diagram illustrating image signal stream of new color space 4₁₆.

Referring to FIG. 12, 4₁₆ transmits image signals in YUV 4:2:2 format according to an order of UYVY. For example of the conventional color space formats, Y, U and V are respectively expressed as 8 bits regarding 0₁₆, and one UYVY set includes information regarding 2 pixels. Thus, one pixel can be expressed with 16 bits. Regarding 4₁₆, Y, U and V respectively include 10 bits of an image signal. Therefore, one pixel can be expressed with 20 bits. When Y, U and V are respectively expressed to be 10 bits, deep color can be expressed. FIG. 12 illustrates the image signal stream transmitted according to an order of U0[0-9], Y0[0-9], V0[0-9], and Y1[0-9].

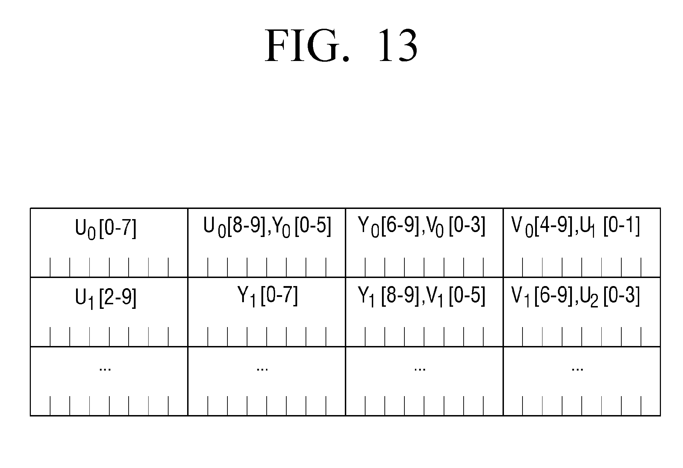

FIG. 13 is a diagram illustrating image signal stream of new color space 5₁₆.

As illustrated in FIG. 13, 5₁₆ transmits image signals in YUV 4:4:4 format according to an order of UYV. For example of the conventional color space formats, Y, U and V are respectively expressed as 8 bits regarding 1₁₆, and one UYV set includes information regarding 1 pixel. Thus, one pixel can be expressed with 24 bits. Regarding 5₁₆, Y, U and V respectively include 10 bits of an image signal as described above in 4₁₆. Therefore, one pixel can be expressed with 30 bits. When Y, U and V are expressed with 10 bits, deep color can be expressed. FIG. 13 illustrates the image signal stream transmitted according to an order of U0[0-9], Y0[0-9], and V0[0-9].

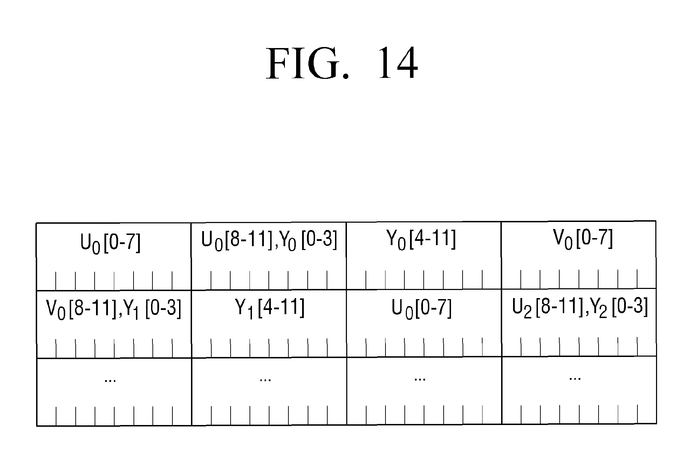

FIG. 14 is a diagram illustrating image signal stream of new color space 6₁₆.

Likewise in FIG. 12, 6₁₆ transmits image signals in YUV 4:2:2 format according to an order of UYVY. Regarding 6₁₆, Y, U and V respectively include 12 bits of an image signal. Therefore, one pixel can be expressed with 24 bits. FIG. 14 illustrates the image signal stream transmitted according to an order of U0[0-11], Y0[0-11], V0[0-11], and Y1[0-11].

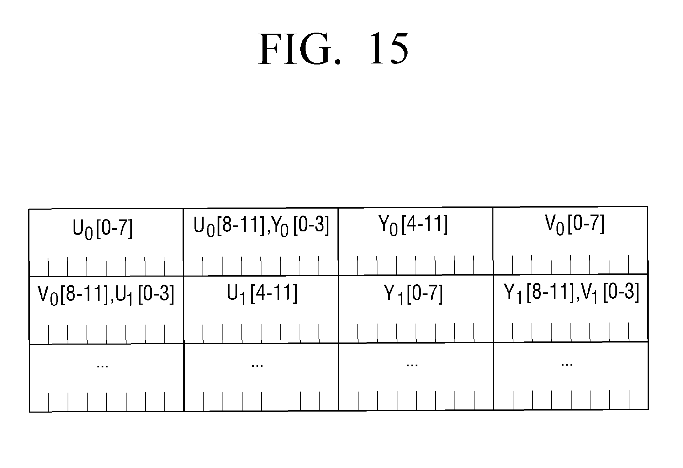

FIG. 15 is a diagram illustrating image signal stream of new color space 7₁₆.

Likewise in FIG. 13, 7₁₆ transmits image signals in YUV 4:4:4 format according to an order of UYV. Regarding 7₁₆, Y, U and V respectively include 12 bits of an image signal, as described above in 6₁₆. Thus, one pixel can be expressed with 36 bits. FIG. 15 illustrates the image signal stream transmitted according to an order of U0[0-11], Y0[0-11], and V0[0-11].

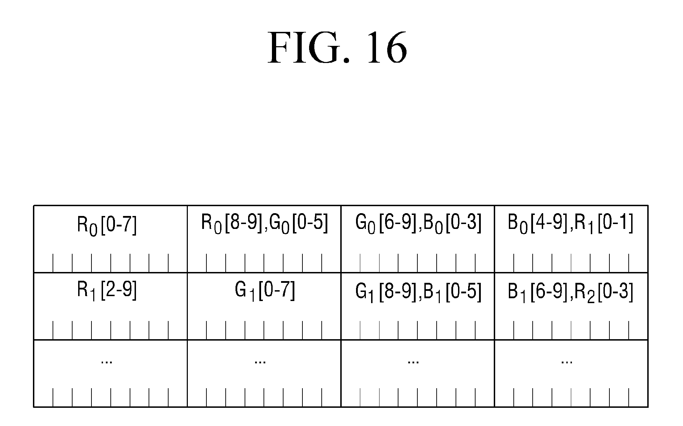

FIG. 16 is a diagram illustrating image signal stream of new color space 8₁₆.

Likewise in FIG. 14, 8₁₆ transmits image signals in RGB format. For example of the conventional color space formats, R, G and B are respectively expressed with 8 bits regarding 2₁₆, and one pixel can be expressed with 24 bits. Regarding 8₁₆, R, G and B respectively include 10 bits of an image signal. Therefore, one pixel can be expressed with 30 bits. When R, G and B are respectively expressed with 10 bits, deep color can be expressed. FIG. 14 illustrates the image signal stream transmitted according to an order of R0[0-9], G0[0-9], and B0[0-9].

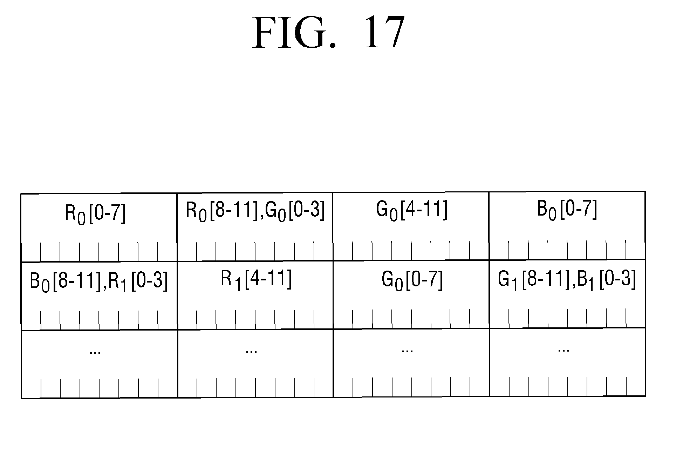

FIG. 17 is a diagram illustrating image signal stream of new color space 9₁₆.

Similarly in FIG. 16, 9₁₆ transmits image signals in RGB format. Regarding 9₁₆, R, G and B respectively include 12 bits of an image signal. Thus, one pixel can be expressed with 36 bits. FIG. 17 illustrates the image signal stream transmitted according to an order of R0[0-11], G0[0-11], and B0[0-11].

### Transmitting Apparatus and Receiving Apparatus 1 of Image Signals

The following will suggest a transmitting apparatus that can transmit image signals and a receiving apparatus that can receive image signals according to the above color space fields 4₁₆, 5₁₆, 6₁₆, 7₁₆, 8₁₆, and 9₁₆.

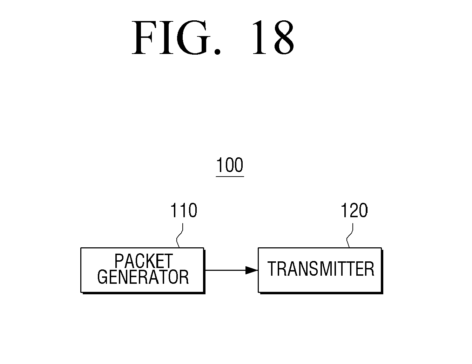

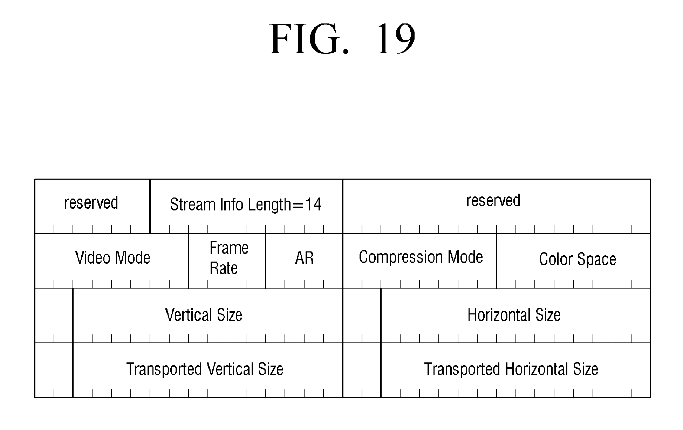

FIG. 18 is a block diagram of the transmitting apparatus according to an embodiment, and FIG. 19 is a diagram illustrating packet header defining stream information fields.

Referring to FIG. 18, the transmitting apparatus 100 according to an embodiment includes a packet generator 110 and a transmitter 120.

The packet generator 110 generates packet containing color space information regarding a plurality of color channels constituting image signals. Herein, the color space information has a number of extended bits in order to additionally express deep color information. For example, when image signals are transmitted according to 4₁₆, the packet generator 110 generates image signals corresponding to Y, U and V to be 10 bits respectively, and constitutes the image signal stream in YUV 4:2:2 according to an order of UYVY. Further, the image signal stream is transmitted according to an order of U0[0-9], Y0[0-9], V0[0-9], Y1[0-9]...

The transmitter 120 transmits the above packet according to HDMI standard.

Meanwhile, the header of the transmitted packet in the packet generator 110 includes stream information fields as illustrated in FIG. 17. In the above embodiment, the color space field includes 4(4₁₆) which is expressed as hexadecimal (16) digits. Through the fields, the transmitting apparatus 100 informs that the image signals follow to the transmitting standard of 4₁₆ to the receiving end.

Besides, the stream information fields include fields in which video mode information is recorded. The video mode information may be index information regarding characteristics of the image signals which are divided and defined with a plurality of items. The items will be further described in a later part of the specification.

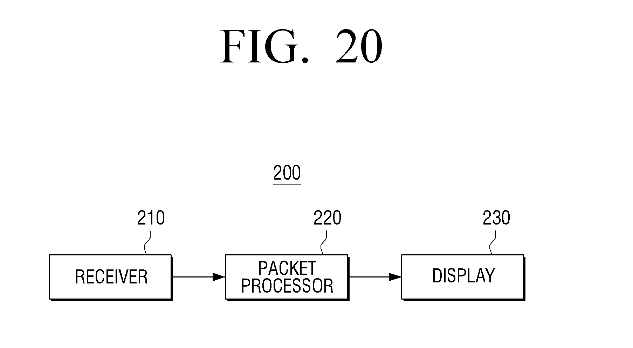

FIG. 20 is a block diagram describing constitution of the receiving apparatus according to an embodiment.

The receiving apparatus 200 according to an embodiment includes a receiver 210, a packet processor 220 and a display 230. The receiving apparatus 200 may be implemented to be various devices provided with a display unit such as TV, cellular phone, PDA, notebook PC, monitor, tablet PC, electronic book, electronic frame, kiosk, flexible display, and head mounted display (HMD).

The receiver 210 receives the packet according to HDMI standard.

The packet processor 220 extracts color space information regarding a plurality of color channels constituting image signals by parsing the packet. First, by considering the color space fields of the packet header, the color space format is distinguished. Next, the image signal streams illustrated in FIGS. 12 to 17 are parsed, and the receiving apparatus 200 constitutes an image frame.

The display 230 displays the image signals according to the extracted color space information described above. The display 230 may be implemented with various display technologies such as liquid crystal display panel (LCD panel), plasma display panel (PDP), vacuum fluorescent display (VFD), field emission display (FED), and electro luminescence display (ELD).

### Transmitting Method and Receiving Method 1 of Image Signals

The following will explain an image signal transmitting method and an image signal receiving method according to various embodiments.

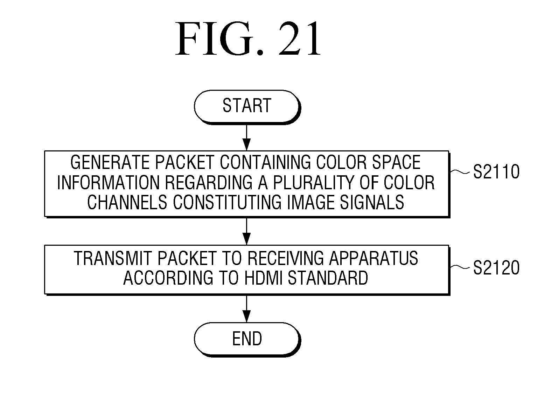

FIG. 21 is a flowchart of the image signal transmitting method according to various embodiments.

Referring to FIG. 21, the image signal transmitting method according to various embodiments includes generating packet which includes the color space information regarding a plurality of color channels constituting image signals at S2110, and transmitting the packet to the receiving apparatus according to HDMI standard at S2120.

Herein, the color bandwidth information may include a number of extended bits to additionally express deep color information.

Further, the color space information may be defined by one format among a plurality of formats, and the packet may include stream information fields which include format information to designate format of the color bandwidth information.

Further the format may be any one of first format in which 20 extended bits are included per one pixel in YUV 4:2:2 packet, second format in which 30 extended bits are included per one pixel in YUV 4:4:4 packet, third format in which 24 extended bits are included per one pixel in YUV 4:2:2 packet, fourth format in which 36 extended bits are included per one pixel in YUV 4:4:4 packet, fifth format in which 30 extended bits are included per one pixel in RGB packet, and sixth format in which 36 extended bits are included per one pixel in RGB packet.

Further, the header of the above packet includes fields in which video mode information is recorded, and the video mode information may be index information regarding characteristics of the image signals which are divided and defined with a plurality of items.

Further, the above items may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422) and MAX VDSP for color space 1 and 2 (444).

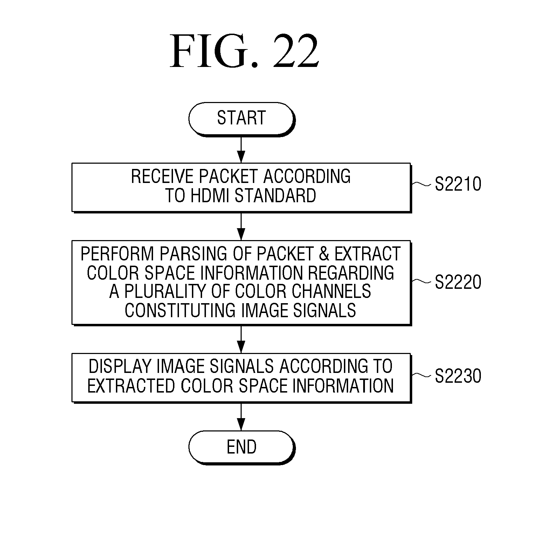

FIG. 22 is a flowchart of the image signal receiving method according to various embodiments.

Referring to FIG. 22, the image signal receiving method according to various embodiments includes receiving the packet according to HDMI standard at S2210, extracting color space information regarding a plurality of color channels constituting image signals by parsing the packet at S2220, and displaying the image signals according to the extracted color space information at S2230. The color space information may include a number of extended bits to additionally express deep color information.

Further, the color space information may be defined by one format among a plurality of formats, and the packet may include stream information fields which include format information to designate format of the color space information.

Further the format may be any one of the first format in which 20 extended bits are included per one pixel in YUV 4:2:2 packet, the second format in which 30 extended bits are included per one pixel in YUV 4:4:4 packet, the third format in which 24 extended bits are included per one pixel in YUV 4:2:2 packet, the fourth format in which 36 extended bits are included per one pixel in YUV 4:4:4 packet, the fifth format in which 30 extended bits are included per one pixel in RGB packet, and the sixth format in which 36 extended bits are included per one pixel in RGB packet.

### Video Mode for 3D, UD, and Deep Color

The following will suggest new video modes to express 3D, UD, and deep color. Currently, IEC61883-8 does not support 3D, UD, and deep color video formats.

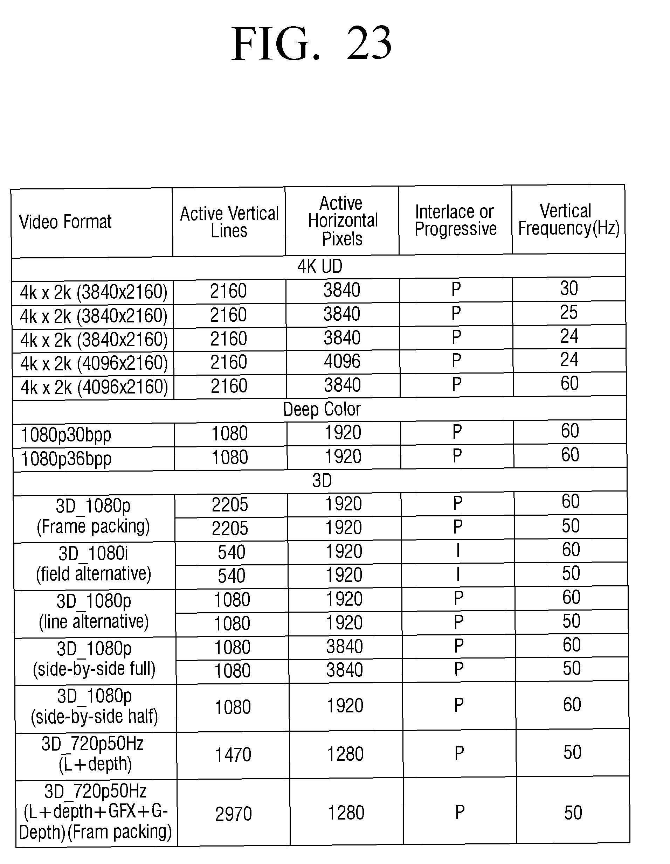

FIG. 23 is a diagram illustrating a table which newly defines 3D, UD, and deep color video formats.

Regarding each video format, source packet size, SYT interval, and MAX VDSP should be defined. Several rules may be considered to add corresponding lines to the described video modes in Video-table 1 of IEC61883-8[1]. Two categories of the rules may be established. One is a case that maximum source packet size cannot exceed 1024 bytes because the field of the data block size on quadlet is 8 bits according to IEC61883. The other one is a case that performing is done according to ethernet while not following to IEC61883. Thus, because the maximum payload length of ethernet is 1500 bytes, and IEEE1722 AVTP header length is 24 bytes, the maximum source packet size cannot exceed 1476 bytes.

IEC61883-compliant rules are as follows:
Because the considered MAC transport is ethernet, the source packet size does not exceed 1024 bytes.

The source packet size is selected by a small class of packet sizes. Thus, implementing can be simplified and code re-using can be enhanced.

The source packet ends on pixel boundary, and the source packet does not include partial pixel data. In other words, the source packet includes integer number of pixels.

While calculating the horizontal frequency, the vertical lines include all of the active lines and the lines in the vertical blanking period.

The maximum video data source packet (VDSP) is obtained from ceil function regarding numerous number of source packets in 125us. Herein, ceil function rounds-up N to be integer value that is greater than or same as N, and the nearest one.

SYT interval is expressed with integer number of lanes. SYT interval is expressed by the video source packet that is higher than or equal to MAX VDSP fixed with integer number of video lines.

SYT interval commands how often timestamp is included. Thus, short SYT interval on AVB network having greater time drift can be helpful.

AVTP-compliant rules are as follows:
Because the considered MAC transport is ethernet, the source packet size does not exceed 1476 bytes.

The source packet size is selected by a small class of packet size. This selecting simplifies the implementation and enhances re-using rate of codes.

The source packet ends on pixel boundary, and does not include partial pixel data. In other words, the source packet includes integer number of pixels.

While the horizontal frequency is calculated, the vertical lines include all of the active lines and the lines in the vertical blanking period.

MAX video data source packet (VDSP) is obtained through the ceil function regarding numerous number of source packets on 125us. Herein, the ceil function rounds up N to be integer value which is the most approximate value while being greater than or uniform to N.

SYT interval is expressed with integer number of lanes. SYT interval is expressed with the video source packet which is higher than or uniform to MAX VDSP fixed with integer number of video lines.

SYT interval commands how often the timestamp is included. Therefore, it may help to include short SYT interval on AVB network having greater time drift.

Based on IEC61883-compliant rules described above, 4K, deep color, and 3D video modes may be added to Table 1 of IEC61883-8[1].

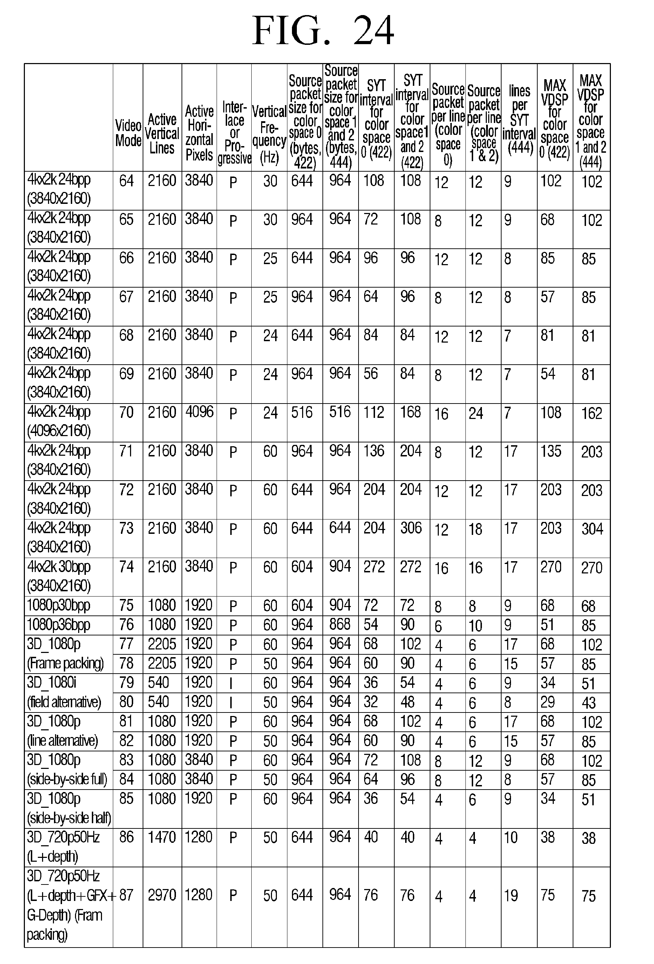

FIG. 24 is a diagram illustrating each field value of Table 1 regarding IEC61883-8[1] which 4k, deep color, and 3D video modes are added.

In Table 1 of IEC61883-8[1], the active vertical line field is an item indicating the active vertical line, and the active horizontal pixel is an item indicating pixel number expressed on the horizontal line. Interlace or progressive item indicates whether a transmitting method of image signals is interlace or progressive. The interlace method first transmits image signals at odd lines constituting an image frame, and next transmits image signals at even lines. The progressive method transmits image signals in each line consecutively. The vertical frequency (Hz) is a value indicating frame rate. The source packet size for color space 0 (bytes, 422) is an item indicating the source packet size for color space 0 in YUV 422 format, which is expressed on a byte basis. The source packet size for color space 1 and 2 (bytes, 444) is an item indicating the source packet size for color spaces 1, 2 in YUV 444 format, which is expressed on a byte basis. SYT interval indicates an interval including the timestamp to fit sync between a transmitting end and a receiving end. Such value indicates a number of packets. The source packet per line indicates a number of source packets per line. At least one video data source packets may be collected to generate and transmit the isochronous packet; MAX VDSP indicates a maximum number of video data source packets that can be included in one isochronous packet. Regarding video mode = 64, MAX VDSP for color space 0 (422) = 102. At maximum, 102 number of VDSP may constitute one isochronous packet.

For example, regarding video mode = 64, it corresponds to format which transmits 4kx2k 24bpp (3840x2160) of image signals. Each item value is described on a first line of Table 1. Unlikely, regarding video mode = 81, it corresponds to format which transmits image signals in 3D_1080p of the line alternative method, the vertical line is 1080, and the horizontal line is 1920, which indicates the progressive method. The frame rate is 60 Hz, and the source packet size regarding the color space 0 is 964 bytes.

### Transmitting Apparatus and Receiving Apparatus 2 of Image Signals

The following will explain the transmitting apparatus and the receiving apparatus according to various embodiments.

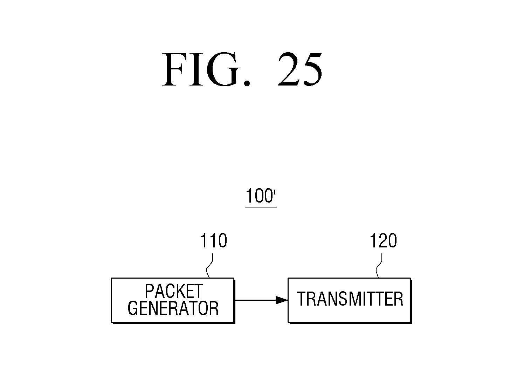

FIG. 25 is a block diagram of the transmitting apparatus according to various embodiments.

Referring to FIG. 25, the transmitting apparatus 100' according to various embodiments includes the packet generator 110 and the transmitter 120. Except the following descriptions regarding each unit, it performs the same operation as the unit having the uniform name according to the above explanation.

The packet generator 110 generates packet constituted with the packet header including fields in which the video mode information is recorded and the payload which image data is recorded.

Herein, the video mode information indicates index information regarding characteristics of image signals divided and defined with a plurality of items. It points at a value of the "video mode" column in Table 1 of IEC61883-8[1] described above in FIG. 24. The video mode is marked on the packet header described below to inform the video mode to the transmitting end.

The packet header includes stream information fields as described in FIG. 17. For example, the packet header performs a role of informing the format to transmit 4kx2k 24bpp(3840x2160) of image signals when video mode = 64 in Table 1 of IEC61883-8[1] to a receiving end.

The transmitter 120 transmits the above packet to the receiving apparatus according to HDMI standard.

At this process, each item in Table 1 of IEC61883-8[1] may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422) and MAX VDSP for color space 1 and 2 (444).

Further, the video mode information may be index information regarding characteristics of 3D (3-dimensional) image signals or UD (ultra definition) image signals which are divided and defined with a plurality of items, as described above.

Thus, the transmitting apparatus 100' inserts 4k, deep color, and 3D video modes into the packet header and transmits to a receiving end. Therefore, the transmitting apparatus 100' can transmit the image signals corresponding to the payload.

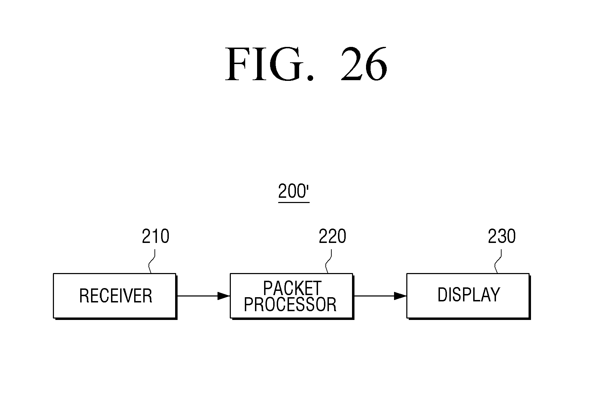

FIG. 26 is a block diagram describing constitution of the receiving apparatus according to various embodiments.

Referring to FIG. 26, the receiving apparatus according to various embodiments includes the receiver 210, the packet processor 220, and the display 230. Except the following descriptions regarding each unit, it performs the same operation as the unit having the uniform name according to the above explanation.

The receiver 210 receives image signal packet containing the video mode information. Herein, the video mode information may be index information regarding characteristics of 3D image signals or UD image signals which are divided and defined with a plurality of items, as described above.

The packet processor 220 performs parsing of the image signal packet by considering the video mode information. For example, when it is established that video mode = 64 in the packet header, the packet processor 220 recognizes the format to transmit 4kx2k 24bpp(3840x2160) of image signals according to the case of video mode = 64 in Table 1 of IEC61883-8[1], and performs parsing. Unlikely, if video mode = 81, the packet processor 220 recognizes the format to transmit 3D_1080p of image signals according to the line alternative method, and performs parsing based on the facts that the vertical line is 1080, the horizontal line is 1920, it is made by the progressive method, the frame rate is 60 Hz, and the source packet size regarding the color space 0 is 964 bytes.

The display 230 displays the image signals extracted according to the parsing results. The display 230 is uniformly understood by the above descriptions.

Herein, the item may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422) and MAX VDSP for color space 1 and 2 (444), which correspond to each field in Table 1 of IEC61883-8[1].

Thus, the receiving apparatus 200' analyzes the transmitted packet header, performs parsing by considering each field in Table 1 of IEC61883-8[1] when the video mode is 4k, deep color, or 3D video mode, and displays the received image signals according to the parsing results.

### Transmitting Method and Receiving Method 2 of Image Signals

The following will explain the transmitting method and the receiving method of image signals according to various embodiments by referring to the drawings.

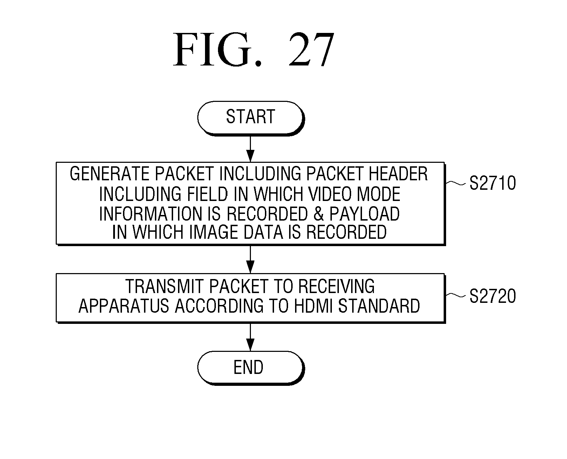

FIG. 27 is a flowchart of the image signal transmitting method according to various embodiments.

The image signal transmitting method according to various embodiments includes generating the packet constituted with the packet header including the fields which the video mode information is recorded and the payload which image data is recorded at S2710, and transmitting the packet to the receiving apparatus according to HDMI standard at S2720. Herein, the video mode information may be index information regarding characteristics of the image signals which are divided and defined with a plurality of items.

Further, the item may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0

(422), SYT interval for color space 1 and 2 (444), source packet per line (color space 0), source packet per line (color space 1 and 2), lines per SYT interval (444), MAX VDSP for color space 0 (422) and MAX VDSP for color space 1 and 2 (444).

Further, the video mode information may be index information regarding characteristics of 3D image signals or UD image signals which are divided and defined with a plurality of items.

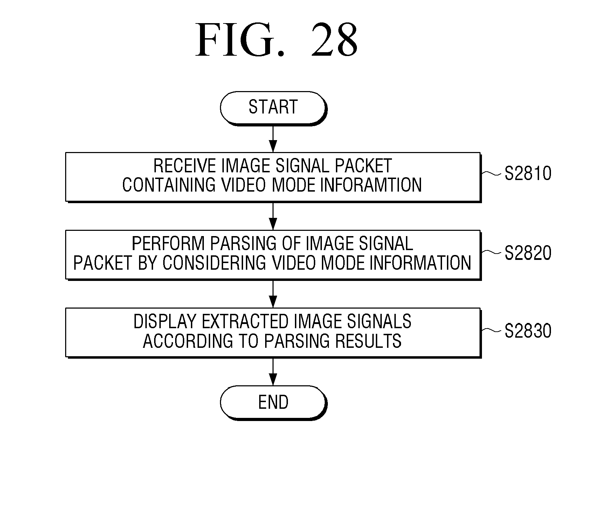

FIG. 28 is a flowchart of the image signal receiving method according to various embodiments.

The image signal receiving method according to various embodiments includes receiving the image signal packet which includes the video mode information at S2810, parsing the image signal packet by considering the video mode information at S2820, and displaying the extracted image signals according to the parsing results at S2830. Herein, the video mode information may be index information regarding characteristics of 3D image signals or UD image signals which are divided and defined with a plurality of items.

Further, the item may include at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422) and MAX VDSP for color space 1 and 2 (444).

The foregoing exemplary embodiments and advantages are merely exemplary and are not to be construed as limiting the exemplary embodiments. The present teaching can be readily applied to other types of apparatuses. Also, the description of the exemplary embodiments of the present inventive concept is intended to be illustrative, and not to limit the scope of the claims.

## Claims

1. A transmitting apparatus, comprising:
a packet generator configured to generate packet containing color space information regarding a plurality of color channels constituting image signals; and
a transmitter configured to transmit the packet to a receiving apparatus according to HDMI standard,
wherein the color space information comprises a number of extended bits to additionally express deep color information.

2. The transmitting apparatus of claim 1, wherein the color space information is defined with one format among a plurality of formats, and the packet comprises stream information fields including format information to designate format of the color bandwidth information.

3. The transmitting apparatus of claim 2, wherein the format is any one of a first format which comprises 20 extended bits per one pixel in YUV 4:2:2 packet, a second format which comprises 30 extended bits per one pixel in YUV 4:4:4 packet, a third format which comprises 24 extended bits per one pixel in YUV 4:2:2 packet, a fourth format which comprises 36 extended bits per one pixel in YUV 4:4:4 packet, a fifth format which comprises 30 extended bits per one pixel in RGB packet, and a sixth format which comprises 36 extended bits per one pixel in RGB packet.

4. The transmitting apparatus of claim 2, wherein the packet header comprises fields which video mode information is recorded, and the video mode information is index information regarding characteristics of the image signals which are divided and defined with a plurality of items.

5. The transmitting apparatus of claim 2, the plurality of items comprise at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

6. A receiving apparatus, comprising:
a receiver configured to receive packet according to HDMI standard;
a packet processor configured to perform parsing of the packet and extract color space information regarding a plurality of color channels constituting image signals; and
a display configured to display the image signals according to the extracted color space information,
wherein the color space information comprises a number of extended bits to additionally express deep color information.

7. The receiving apparatus of claim 6, wherein the color space information is defined with one format among a plurality of formats, and the packet comprises stream information fields including format information to designate format of the color space information.

8. The receiving apparatus of claim 7, wherein the format is any one of a first format which comprises 20 extended bits per one pixel in YUV 4:2:2 packet, a second format which comprises 30 extended bits per one pixel in YUV 4:4:4 packet, a third format which comprises 24 extended bits per one pixel in YUV 4:2:2 packet, a fourth format which comprises 36 extended bits per one pixel in YUV 4:4:4 packet, a fifth format which comprises 30 extended bits per one pixel in RGB packet, and a sixth format which comprises 36 extended bits per one pixel in RGB packet.

9. An image signal transmitting method, comprising:
generating packet constituting packet header comprising fields which video mode information is recorded and payload which image data is recorded; and
transmitting the packet to a receiving apparatus according to HDMI standard,
wherein the video mode information is index information regarding characteristics of the image signals which are divided and defined with a plurality of items.

10. The image signal transmitting method of claim 9, wherein the items comprise at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).

11. The image signal transmitting method of claim 9, wherein the video mode information is index information regarding characteristics of 3D (3-dimensional) image signals or UD (ultra definition) image signals which are divided and defined with a plurality of items.

12. An image signal receiving method, comprising:
receiving image signal packet containing video mode information;
parsing the image signal packet by considering the video mode information; and
displaying the extracted image signals according to the parsing results,
wherein the video mode information is index information regarding characteristics of 3D image signals or UD image signals which are divided and defined with a plurality of items.

13. The image signal receiving method of claim 12, wherein the items comprise at least one of active vertical lines, active horizontal pixels, interlace/progressive, vertical frequency (Hz), source packet size for color space 0 (bytes, 422), source packet size for color space 1 and 2 (bytes, 444), SYT interval for color space 0 (422), SYT interval for color space 1 and 2 (444), source packet per line (color space 0), source packet per line (color space 1 and 2), lines per SYT interval (444), MAX VDSP for color space 0 (422), and MAX VDSP for color space 1 and 2 (444).
